(19) Europäisches Patentamt
European Patent Office
Office européen des brevets

(11) **EP 3 380 222 B1**

(12) **EUROPÄISCHE PATENTSCHRIFT**

(45) Veröffentlichungstag und Bekanntmachung des Hinweises auf die Patenterteilung:
**03.08.2022   Patentblatt 2022/31**

(21) Anmeldenummer: **16802003.0**

(22) Anmeldetag: **18.11.2016**

(51) Internationale Patentklassifikation (IPC):
**C01B 21/26** *(2006.01)*   **C01B 21/38** *(2006.01)*
**C01B 21/28** *(2006.01)*   **B01J 8/00** *(2006.01)*
**B01J 19/24** *(2006.01)*

(52) Gemeinsame Patentklassifikation (CPC):
**C01B 21/28; B01J 19/2485; C01B 21/26; C01B 21/38**

(86) Internationale Anmeldenummer:
**PCT/EP2016/078100**

(87) Internationale Veröffentlichungsnummer:
**WO 2017/089231 (01.06.2017 Gazette 2017/22)**

(54) **MODULARE KATALYSATORMONOLITHE**

**MODULAR CATALYST MONOLITHS**

**MONOLITHE CATALYSEUR MODULAIRE**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2015   EP 15196794**

(43) Veröffentlichungstag der Anmeldung:
**03.10.2018   Patentblatt 2018/40**

(73) Patentinhaber: **BASF SE**
**67056 Ludwigshafen (DE)**

(72) Erfinder:
• **OLBERT, Gerhard**
  **67056 Ludwigshafen (DE)**
• **GAUER, Jochen**
  **67056 Ludwigshafen (DE)**
• **FRIEDRICH, Holger**
  **67056 Ludwigshafen (DE)**
• **SPIEGEL, Andreas**
  **67056 Ludwigshafen (DE)**
• **WOELFERT, Andreas**
  **67056 Ludwigshafen (DE)**
• **GMEINER, Wolfgang**
  **67056 Ludwigshafen (DE)**
• **LORENZ, Michael**
  **67056 Ludwigshafen (DE)**

(74) Vertreter: **BASF IP Association**
**BASF SE**
**G-FLP-C006**
**67056 Ludwigshafen (DE)**

(56) Entgegenhaltungen:
WO-A1-2006/009453     WO-A1-2015/022247
DE-A1- 19 819 882

## Beschreibung

Die vorliegende Erfindung betrifft einen Reaktor R, vorzugsweise einem Hochtemperaturreaktor mit Vorrichtung D, die Verwendung des Reaktors R mit der Vorrichtung D sowie ein Verfahren zur Herstellung von Stickstoffoxiden oder Salpetersäure jeweils unter Verwendung des Reaktors R mit der Vorrichtung D, jeweils wie in den Ansprüchen definiert.

In Reaktoren aufgenommene Vorrichtungen, beispielsweise in korbartiger Gestalt, die in der Regel, auch aus Konstruktions- oder Festigkeitsgründen, aus gut wärmeleitfähigen Werkstoffen wie Metall oder Metalllegierungen, zum Beispiel Stahl bestehen, dehnen sich aus, wenn der Reaktor beispielsweise auf Betriebstemperatur aufgeheizt wird oder sich durch Reaktionswärme aufheizt und ziehen sich zusammen, wenn der Reaktor abkühlt.

Wenn derartige Vorrichtungen leicht verschiebbare, partikuläre, beispielsweise geschüttete Füllungen aus zylindrischen oder sternförmigen katalytisch aktiven oder nicht katalytisch aktiven Partikeln enthalten, bilden sich durch die Wärmeausdehnungsunterschiede von Vorrichtung und genannter Füllung in der Regel im Randbereich der Vorrichtung Vertiefungen - oft unregelmäßig und trichterförmig - in die Partikel üblicherweise aus dem Randbereich der Vorrichtung nachrieseln bzw. absacken.

Dies ist unerwünscht, da die Inhomogenität der Füllung üblicherweise verschlechterte Eigenschaften, beispielsweise bezüglich deren katalytischen Verhaltens zur Folge hat. In den Vertiefungen im Randbereich ist nämlich beispielsweise die Strömungsgeschwindigkeit eines Gases größer als in Bereichen ohne Vertiefung, damit sinkt üblicherweise die Verweilzeit des Gases im Randbereich, dem Reaktionsgas steht dort auch weniger katalytische Fläche zur Verfügung, was in der Regel zu geringeren katalytischen Umsätzen im Randbereich und insgesamt führt.

Die voran beschriebene Vorrichtungen können außerdem zusätzlich zu den genannten Partikeln oder an Stelle der genannten Partikel monolithische Formkörper mit beispielsweise wabenförmiger Gestalt enthalten, welche häufig aus gepresstem, extrudierten und/oder gesintertem anorganischen Material bestehen das üblicherweise spröde, zerbrechlich oder abriebempfindlich ist. Durch die oben beschriebene Ausdehnung und Zusammenziehen der voran beschriebenen Vorrichtung können auch die monolithischen Formkörper in Bewegung geraten, sich zum Beispiel aneinander reiben und auseinanderbrechen oder umfallen. Dies zieht die gleichen Probleme nach sich wie voran für die Partikelfüllung beschrieben.

Außerdem ist es mühsam und ineffizient derartige monolithische katalytische Formkörper gegen frische Formkörper Stück für Stück auszutauschen und es besteht die Gefahr des Bruchs derartiger Formkörper beim Herausnehmen aus oder Einsetzen in die aufnehmende Vorrichtung.

Es kommt außerdem relativ häufig vor, dass die Reaktoren, häufig durch unsteten Betrieb, ungeplant und ungewollt ausfallen und repariert werden müssen, wofür man dann auch die genannten monolithische katalytische Formkörper ausbauen muss, um an die Reparaturstelle zu gelangen und nach erfolgter Reparatur des Reaktors diese Formkörper wieder einbauen muss. Die oben beschriebenen Nachteile finden sich beispielsweise in Verfahren zur Herstellung von Stickstoffoxiden und/oder Salpetersäure durch Oxidation von Ammoniak in Gegenwart eines Katalysators, beispielsweise eines edelmetallhaltigen Katalysatornetzes. Hierbei werden die Oxidationsprodukte des Ammoniaks üblicherweise durch eine Schüttung eines partikulären und/oder ein Bett eines aus monolithischen Formkörpern bestehenden Lachgaszersetzungskatalysators geführt, die sich üblicherweise in einer korbartigen Vorrichtung befindet. So führen in diesem Verfahren beispielsweise die oben genannten trichterförmigen Vertiefungen oder auch Zerstörungen oder Unordnungen der monolithischen Formkörper in dieser Schüttung bzw. Bett aus Lachgaszersetzungskatalysator zur verringerten Zersetzung des Lachgases der Katalysatorschüttung, was wiederum üblicherweise höhere Lachgas-Emissionen der Produktionsanlage nach sich zieht, die unerwünscht sind.

Eine strukturierte Packung (beispielsweise hexagonal oder kubisch) von Katalysatorformkörpern (modular structured fixed-bed reactor, "MOSFIBER") zur Zersetzung von beispielsweise Distickstoffmonoxid ($N_2O$) in einem Reaktor ist aus WO 2006/009453 A1 (Yara International) bekannt. WO 2006/009453 A1 schweigt jedoch zu dem Problem der Abrasion oder Bruch dieser Katalysatorformkörper während des Betriebs des Reaktors sowie deren Austausch gegen neue Katalysatorformkörper.

WO 2015/022247 A1 offenbart ein Reaktor mit einer Vorrichtung enthaltend einen gas-und/oder Flüssigkeits-durchlässigen Boden in dessen Randbereich eine Seitenbegrenzung angeordnet ist, die den Boden vollständig umschließt und ein Volumen V bildet, das Formkörper enthält, wobei sich auf der dem Boden stromaufwärts gegenüberliegenden Seite mindestens ein Geflecht aus Metall befindet. WO 2015/022247 A1 befasst sich mit den Problemen, die durch die unterschiedliche Wärmeausdehnung verschiedener Materialien verursacht werden.

Aufgabe der vorliegenden Erfindung war es, einen Reaktor mit Vorrichtung zur Verfügung zu stellen, letztere enthaltend katalytische monolithische Formkörper, die während des Betriebs des Reaktors praktisch nicht beschädigt oder zerstört werden und die sich effizient und praktisch ohne ihre Beschädigung oder Zerstörung vollständig oder teilweise ein- und/oder ausbauen lassen.

Demgemäß wurde der Reaktor R, vorzugsweise ein Hochtemperaturreaktor, mit der Vorrichtung D, die Verwendung des Reaktors R mit der Vorrichtung D sowie ein Verfahren zur Herstellung von Stickstoffoxiden oder Salpetersäure jeweils unter Verwendung des Reaktors R mit der Vorrichtung D, jeweils wie in den Ansprüchen definiert, gefunden.

In einer bevorzugten Ausführungsform der Erfindung wird der Reaktor R mit der Vorrichtung D, jeweils wie im Folgenden beschrieben, in einem Verfahren zur Herstellung von Stickstoffoxiden und/oder Salpetersäure verwendet. Diese Ausführungsform wird im Folgenden auch als "NOx/HNO$_3$-Ausführungsform" bezeichnet, und das Folgende gilt ausdrücklich - wo nicht explizit anders angegeben - insbesondere für die NOx/HNO$_3$-Ausführungsform.

Verfahren zur Herstellung von Stickstoffoxiden und/oder Salpetersäure, üblicherweise durch katalytische Oxidation von Ammoniak mit einem sauerstoffhaltigen Gas, in der Regel Luft, sind bekannt und beispielsweise unter"Nitric Acid, Nitrous Acid, and Nitrogen Oxides" in Ullmanns Encyclopedia of Industrial Chemistry, Sixth, Completely Revised Edition, Volume 23, Seiten 1 bis 49, 2003, Wiley-VCH Verlag GmbH & Co. KGaA, Weinheim beschrieben.

Üblicherweise wird in einem Verfahren zur Herstellung von Stickstoffoxiden und/oder Salpetersäure ein Gemisch aus Ammoniak und einem sauerstoffhaltigen Gas, beispielsweise Luft oder auch reiner Sauerstoff, bei üblicherweise relativ hoher Temperatur, beispielsweise im Bereich von 800 bis 900 °C, katalytisch, beispielsweise an einem Netz aus Edelmetall wie Platin oder Platin-Rhodiumlegierung, umgesetzt und die entstandenen Reaktionsprodukte, die in der Regel Stickstoffmonoxid als Hauptkomponente und Distickstoffoxid ("Lachgas") als Nebenkomponente enthalten, strömen üblicherweise durch ein Bett mit katalytischen und/oder nicht-katalytischen, üblicherweise keramischen, gegenüber den Reaktionsbedingungen im Reaktor beständigen Formkörpern, welches in Strömungsrichtung stromabwärts, üblicherweise unterhalb des Katalysatornetzes, angeordnet ist.

Dieses Bett ist üblicherweise hinsichtlich der Zersetzung von Distickstoffoxid katalytisch aktiv, üblicherweise in einer korbartigen Vorrichtung aufgenommen und baut in der Regel das Distickstoffmonoxid in die Elemente Stickstoff (N$_2$) und Sauerstoff (O$_2$) ab. Nachdem das Reaktionsgemisch die üblicherweise korbartige Vorrichtung verlassen hat, wird es üblicherweise an Wärmetauschern abgekühlt, wobei es mit Sauerstoff unter Bildung von Stickstoffdioxid weiter reagiert. Das Reaktionsgemisch wird in der Regel über verschiedene Wärmetauscher weiter abgekühlt - wobei teilweise bereits Salpetersäure auskondensieren kann - und letztendlich wird das Reaktionsgemisch in einer Absorptionsvorrichtung mit Wasser unter Bildung von Salpetersäure umgesetzt. Die zuvor in der Kühlung/Kondensation eventuell auskondensierte verdünnte Salpetersäure wird üblicherweise ebenfalls in die Absorptionsvorrichtung eingespeist.

Im Folgenden wird die Erfindung genauer beschrieben.

Der Werkstoff für die Vorrichtung D ist üblicherweise ein Hochtemperaturwerkstoff aus Metall, zum Beispiel Inconel 600 (Werkstoff-Nr. 2.4816), Alloy 602 CA, Haynes Alloy oder auch Werkstoffe aus austinitischen Stählen mit den Werkstoffbezeichnungen 1.4828 und 1.4835. und 1.4876. Die Wärmeausdehungskoeffizienten dieser Werkstoffe liegen üblicherweise bei einer Betriebstemperatur von 800 - 900 °C im Bereich von 17 × 10$^{-6}$ K$^{-1}$ bis 19 × 10$^{-6}$ K$^{-1}$.

Ein gut geeigneter Werkstoff für die Vorrichtung D ist Inconel 600 oder Stahl mit der Werkstoffnummer 1.4835 oder Alloy 602 CA oder Haynes Alloy.

Bevorzugt als Werkstoff für die Vorrichtung D sind Inconel 600, Stahl mit der Werkstoffnummer 1.4835 oder Alloy 602 CA.

Der Boden B der Vorrichtung D ist in der Regel perforiert wobei die Art und Geometrie der Perforierung nicht kritisch ist und insbesondere durchlässig für Gase und/oder Flüssigkeiten, vorzugsweise für Gase. Üblicherweise ist der Boden B so perforiert, dass die Partikel die er üblicherweise trägt nicht durch die Perforierung fallen können.

In einer Ausführungsform enthält der Boden B ein Tragteil, zum Beispiel einen Rost aus Rahmen oder einer Metallwabenkonstruktion auf dem ein metallisches Bodennetz oder mehrere, beispielsweise zwei bis drei, metallische Bodennetze, üblicherweise unterschiedlicher Maschenweiten und/oder unterschiedlicher Maschendrahtstärken, aufliegen können. Das Tragteil, zum Beispiel ein Rost aus Rahmen oder einer Wabenkonstruktion, kann aus einem Stück bestehen, es kann aber auch aus mehreren Segmenten, bevorzugt 2 bis 8 Segmenten, besonders bevorzugt 4 bis 6 Segmenten zusammengesetzt sein, die untereinander leicht fixiert sein können, wobei die Geometrie der Segmente mannigfaltig sein kann, beispielsweise Viertelkreissegmente, Sechstelkreissegmente, Achtelkreissegmente, ergo "Tortenstück-Geometrie".

Die Öffnungen der oben genannten Bodennetze können jegliche Querschnittsgeometrie haben, beispielsweise, rechteckig, sechseckig, rund.

Üblicherweise ist der Boden B aus dem Werkstoff 1.4835, Alloy 602 CA und Inconel 600, vorzugsweise Inconel 600 oder Alloy 602 CA.

Die Querschnittsgeometrie des Bodens B an sich richtet sich in der Regel nach der Querschnittsgeometrie des Reaktors R in welchem er üblicherweise aufgenommen ist. Vorzugsweise ist die Querschnittsgeometrie des Bodens B dieselbe wie jene des Reaktors R in dem der Boden B aufgenommen ist.

Als Querschnittsgeometrie für den Boden B und/oder den Reaktor R in welchem er aufgenommen ist kommen eckige, vorzugsweise viereckige oder sechseckige, besonders bevorzugt rechteckige oder gleichmäßig sechseckige Querschnitte in Frage.

Weiterhin kommen als Querschnittsgeometrie für den Boden B und/oder den Reaktor R in welchem er aufgenommen ist praktisch runde oder elliptische Querschnitte, vorzugsweise praktisch runde oder runde Querschnitte für den Boden B und/oder den Reaktor R in welchem er aufgenommen ist in Frage. Besonders bevorzugt ist der Querschnitt des Bodens B und/oder der Querschnitt des Reaktors in welchem er aufgenommen ist praktisch rund oder rund.

Der Boden B kann beispielsweise unmittelbar oder über keramische oder metallische Abstandhalter auf einem stromabwärts unter dem Boden B angeordneten Kühler oder Wärmetauscher im Reaktor R gelagert sein. Der Boden B kann auch über eine mittlere innere Stütze und seitlichen Laschen die als Auflager dienen gestützt werden.

Der Werkstoff für die Seitenbegrenzung W der Vorrichtung D ist üblicherweise der gleiche wie für den Boden B.

Die Seitenbegrenzung W ist in dem Randbereich des Bodens B so angeordnet, dass sie den Boden B vollständig umschließt und einen Raum mit dem Volumen V bildet das zum Teil oder vollständig mit katalytischen und/oder nicht-katalytischen Formkörpern - wie weiter unten genauer ausgeführt - gefüllt ist. In einer besonderen Ausführungsform kann die Seitenbegrenzung mit dem Boden B fest verbunden sein, wobei dann eine korbartige Verbindung gebildet wird.

Die Seitenbegrenzung W ist üblicherweise relativ zum Boden B in den Winkeln von 45° bis 135°, vorzugsweise praktisch rechtwinklig angeordnet. Die Seitenbegrenzung W ist üblicherweise gerade, ergo in vertikaler Richtung praktisch nicht gebogen.

Das Verhältnis der Höhe der Seitenbegrenzung W zum lichten Durchmesser des Bodens B liegt üblicherweise im Bereich von 0,04 bis 0,2.

Übliche Höhen der Seitenbegrenzung W liegen im Bereich von 100 bis 1000 mm, bevorzugt 150 bis 600 mm.

Übliche lichte Durchmesser des Bodens B liegen im Bereich von 2500 bis 6000 mm.

Die Seitenbegrenzung W kann, muss aber nicht, aus einem Stück angefertigt sein, sondern kann auch aus Einzelteilen bzw. Segmenten bestehen.

Zumindest auf einem Teil der Fläche der Innenseite der Seitenbegrenzung W kann sich vorteilhaft eine wärmeisolierende Schicht S befinden, vorzugsweise in dem sich dem Boden B direkt stromaufwärts anschließenden Bereich. Die wärmeisolierende Schicht S kann die Fläche der Innenseite der Seitenbegrenzung W beispielsweise zu 30% bis praktisch 100%, vorzugsweise praktisch vollständig bedecken.

Vorzugsweise bedeckt die wärmeisolierende Schicht S mindestens die unteren 30%, beispielsweise 30% bis 90%, also jene dem Boden B nächstliegenden Teile der Fläche der Innenseite der Seitenbegrenzung W.

Die wärmeisolierende Schicht S umschließt auf der Innenseite der Seitenbegrenzung W diese in der Regel vollständig.

Die wärmeisolierende Schicht S schließt sich üblicherweise praktisch unmittelbar, also praktisch abstandsfrei, in Richtung Mittelpunkt der Vorrichtung D an die Innenseite der Seitenbegrenzung W an. Die wärmeisolierende Schicht S kann der dem Mittelpunkt der Vorrichtung D zugewandten Seite, beispielsweise an der Kontaktseite zur Schüttung aus Partikeln oder den Formkörpern, praktisch jegliche Querschnittsgeometrie annehmen, beispielsweise von gerade (rechteckig) bis schräg, beispielsweise in Form eines Trapezes, nach innen gewölbt (konkav) und nach außen, also dem Mittelpunkt der Vorrichtung D zugewandten Seite - gewölbt (konvex), stufenartig mit einer oder mehreren Stufen.

Die wärmeisolierende Schicht S kann aus einem Stück bestehen oder aus einzelnen Elementen zur gewünschten Querschnittsgeometrie zusammengesetzt werden, wie weiter unten näher beschrieben wird.

Die Dicke dieser wärmeisolierenden Schicht S bezogen auf den Durchmesser des Bodens B liegt üblicherweise im Bereich von 0,5 % bis 5 %, beispielsweise bei 1,0 %. Beispielsweise ist die wärmeisolierende Schicht S bei einem Durchmesser des Bodens B von 2500 bis 6000 mm 50 mm dick.

Das Material für die wärmeisolierende Schicht S wird ausgewählt aus der Gruppe bestehend aus keramischem Material, beispielsweise Schamott, mikroporösem Material und Silikatfasern , wobei die vorbenannten Materalien sich in der Regel im Temperaturbereich von ca. 700 bis 1100 °C nicht zersetzen und üblicherweise eine Wärmeleitfähigkeit im Bereich von 0,03 bis 0,15 W/m/K haben.

Als mikroporöses Material sind mikroporöse silikatische Substanzen, enthaltend hochdisperse Kieselsäure und Trübungsmittel, die sich im Temperaturbereich von ca. 700 bis 1100 °C nicht zersetzen und im Temperaturbereich von 700 bis 1100 °C eine Wärmeleitfähigkeit im Bereich von 0,04 bis 0,09 W/mK haben bevorzugt, beispielsweise die Produkte WDS ® High und WDS® Ultra der Firma Porextherm, siehe dreiseitiges Datenblatt Version 1.4/15-02 10/HH WDS® High und dreiseitiges Datenblatt Version 1.03/15-02 10/HH WDS® Ultra der Firma Porextherm Dämmstoffe GmbH, Heisinger Straße 8/10, 87437 Kempten, www.porextherm.com.

Die wärmeisolierende Schicht S kann aus Platten von beispielsweise 10 bis 50 mm Dicke aus dem vorangenannten Material, vorzugsweise den mikroporösen silikatischen Substanzen, aufgebaut werden, wobei die Platten den benötigten Formen bzw. Querschnittsgeometrien der wärmeisolierenden Schicht W angepasst werden.

In einer bevorzugten Ausführungsform ist das voranstehend genannte Material, vorzugsweise mikroporöse silikatische Substanzen - diese bevorzugt, nachdem sie bei 850 °C thermisch vorbehandelt wurden - und/oder Silikatfasern in Form von Matten, für die wärmeisoliernde Schicht S eingehaust in Kassetten (im Folgenden auch als "Isolierkassetten" bezeichnet), wie im Folgenden beschrieben, welche dann, wie im Folgenden beschrieben, im Allgemeinen zu der wärmeisolierenden Schicht S zusammengesetzt werden können.

Beispielhaft sei im Folgenden eine Isolierkassette mit eingehaustem Isoliermaterial beschrieben.

Die Isolierkassette besteht üblicherweise aus einem Metallgehäuse, beispielsweise aus hochtemperaturbeständigen Stählen, das mit einem oder mehreren Isoliermaterialien, wie dem oben beschriebenen mikroporöse Material, vorzugsweise den mikroporösen silikatischen Substanzen, und/oder Silikatfasern, letztere vorzugsweise in Form von Matten, befüllt ist. Beispielsweise ist das in die Isolierkassetten eingebaute mikroporöse Material durch Silikatfasermatten und Silikatfasern zur Metallwand hin beabstandet.

Das Metallgehäuse der Isolierkassetten kann aus einem oder mehreren Metallen bestehen, beispielsweise Hochtemperaturwerkstoffen wie Inconel 600, Alloy 602 CA üblicherweise auf der höherer Temperatur zugewandten Isolierkassettenseite und Werkstoff 1.4541 auf der üblicherweise geringerer Temperatur zugewandten Isolierkassettenseite.

Diese Isolierkassetten haben vorzugsweise eine quaderförmige Gestalt, vorzugsweise mit einer leichten Krümmung und Falzen bzw. anderen Überlappungseinrichtungen, die eine Nut- und Federkonfiguration bilden können und sind beispielsweise in der Figur 12 dargestellt, in welcher die Bezugszeichen die hierin genannte Bedeutung haben. Die auf den Stirnseiten der Kassetten befindlichen Wände, die üblicherweise die Falz- und Überlappungsbereiche der aneinandergefügten Kassetten bilden, sind üblicherweise in dünner Metallstärke auszuführen, beispielsweise um den effektiven Gesamtwärmedurchgang zu vermindern.

Die Wandstärke der Falz-/ und Überlappungsbereich der Isolierkassetten liegt üblicherweise im Bereich von 0,2 bis 0,5 mm und ist üblicherweise geringer als die Wandstärke des restlichen Teils der Wärmedämmkassette, die üblicherweise im Bereich von 0,8 bis 1,5 mm liegt. Vorzugsweise sind die Falz- und Überlappungsbereiche der Isolierkassetten in einem welligen Muster geprägt.

Beispielsweise werden zum Aufbau der wärmeisolierenden Schicht S die oben beschriebenen Isolierkassetten segmentartig auf der Innenseite der Seitenbegrenzung W über den Umfang angeordnet, wie beispielsweise in der Figur 13 dargestellt in welchen die Bezugszeichen die hierin genannte Bedeutung haben.

Die Isolierkassetten sind vorzugsweise in Umfangsrichtung (tangentialer Richtung) mit Schiebesitz oder anderen Überlagerungstechniken, beispielsweise Nut und Feder, ausgestattet und beispielsweise nur in Umfangsrichtung bewegungsfrei.

Üblicherweise werden die Isolierkassetten bei der Temperatur der Montage, diese ist üblicherweise 0 bis 30 °C, so aneinandergefügt, dass am Ort, wo die Isolierkassette einer höheren Temperatur im Reaktor R ausgesetzt ist, die Fugenweite größer ist als am Ort niedrigerer Temperatur im Reaktor R, was üblicherweise dazu führt, dass die Isolierkassetten sich unter erhöhter Betriebstemperatur im Reaktor R durch Ausdehnung praktisch ohne Spannung oder Bildung von Verwerfungen möglichst schlüssig aneinander fügen.

In einer Ausführungsform kann ein Teil der Seitenbegrenzung W - mit oder vorzugsweise ohne eine wärmeisolierende Schicht S - hier W1 genannt, fest mit dem Boden B verbunden sein, diesen vollständig umschließen und relativ niedrig sein, beispielsweise hat W1 eine Höhe im Bereich von 50 bis 150 mm. Der zweite Teil der Seitenbegrenzung W, hier W2 genannt, kann als "Schürze", beispielsweise in Form einer Z-förmigen Konstruktion, an der Reaktorinnenwand diese vollständig umschließend angeordnet und vorzugsweise fixiert sein, wobei das Ende der Schürze W2 als beispielsweise nach unten schauendes umgedrehtes U- oder V-Profil ausgebildet ist. In die Öffnung dieses umgedrehten Us oder Vs ragt die Seitenbegrenzung W1 hinein. Die feste Verbindung der Seitenbegrenzung W1 mit dem Boden B wird beispielsweise durch Verschweißen herbeigeführt. Die wärmeisolierende Schicht S ist, üblicherweise unterhalb eines eventuell vorhandenen Katalysatornetzes, vorzugsweise zweiteilig und vorzugsweise in Schiebesitzkonfiguration ausgestaltet, wobei üblicherweise der obere der beiden Teile der wärmeisolierenden Schicht S mit der oberen Seitenbegrenzung W2 vorzugsweise fest verbunden ist und der untere Teil der wärmeisolierenden Schicht S nicht fest mit der oberen Seitenbegrenzung W2 verbunden ist, so, dass er sich noch in vertikale Richtung auf- und abwärts bewegen kann. Es kann eine wärmeisolierende Schicht S auch oberhalb eines eventuell vorhandenen Katalysatornetzes, vorzugsweise den gesamten Rest der Seitenbegrenzung W bedeckend, angebracht sein. In einer Variante dieser Ausführungsform kann W1 mit dem Boden B nicht fest, sondern so reversibel verbunden sein, dass sie durch wenige Handgriffe von diesem gelöst und wieder mit diesem verbunden werden kann, beispielsweise durch Schweißen, Stecken, Schrauben.

In einer weiteren Ausführungsform umschließt die Seitenbegrenzung W den Boden B vollständig und ist mit diesem nicht fest verbunden, sondern beispielsweise als "Schürze" an der Reaktorinnenwand diese vollständig umschließend angeordnet und vorzugsweise fixiert, wobei zwischen dem unteren Ende der Schürze und dem Boden B eine umlaufende Lücke ist.

Üblicherweise sind mindestens in dem Bereich der Innenwand des Reaktors R, wo die Vorrichtung D aufgenommen ist, zwischen der Innenwand des Reaktors R und der Außenseite der Seitenbegrenzung W der Vorrichtung D Kühlvorrichtungen, beispielsweise mit einem wärmeaufnehmenden Medium - beispielsweise Wasser oder Salzschmelze - durchströmte Rohre angeordnet, beispielsweise dadurch, dass die Rohre in Form einer Rohrwendel zwischen Reaktorinnenwand und der Außenseite der Seitenbegrenzung W angeordnet sind. Derartige Kühlvorrichtungen haben üblicherweise die Aufgabe die Reaktorwand durch aktive Kühlung, zumindest im Bereich der Vorrichtung D und/oder der Reaktorflansche, gegen zu starke Hitze zu schützen.

In einer Ausführungsform können die Kühlvorrichtungen an der Innenwand des Reaktors R im Bereich der Vorrichtung D gänzlich oder zum Teil durch eine wärmeisolierende Schicht S, wie hierin beschrieben, ersetzt sein.

Hierbei bildet der Bereich der Innenwand des Reaktors R, wo die Vorrichtung D aufgenommen ist, selbst die Seitenbegrenzung W, auf deren Innenseite sich zumindest zum Teil, vorzugsweise vollständig und praktisch lückenlos umlaufend, die wärmeisolierende Schicht S, wie oben beschrieben - vorzugsweise aus den oben beschriebenen Isolierkassetten - und beispielsweise bis zu einer Höhe im Bereich von 200 bis 1200 mm, gemessen vom Boden B aus stromaufwärts, befindet.

Auf der dem Boden B stromaufwärts gegenüberliegenden Seite befindet sich mindestens ein Geflecht aus Edelmetall, beispielsweise Platin, Palladium, Rhodium und/oder Edelmetall-Legierungen, beispielsweise enthaltend die vorangenannten Edelmetallen, und/oder mindestens ein Geflecht aus Nicht-Edelmetall, beispielsweise Megapyr-Netz (Kanthal-Netz) - dieses üblicherweise zur mechanischen Stabilisierung des Edelmetallnetzes. Das voran beschriebene Geflecht aus Edelmetall und/oder Nicht-Edelmetall wird hierin auch "Katalysatornetz" genannt.

Das Volumen V der Vorrichtung D enthält katalytische und/oder nicht-katalytische Formkörper (F) wie im Folgenden beschrieben.

Nicht-katalytische Formkörper (F) sind hierin üblicherweise keramische, gegenüber den Reaktionsbedingungen im Reaktor R beständige und die Reaktionen im Reaktor R praktisch nicht katalysierende Formkörper.

Katalytische Formkörper (F) sind hierin in der Regel Formkörper welche eine oder mehrere im Reaktor R ablaufende Reaktionen, beispielsweise die Zersetzung von Distickstoffmonoxid ($N_2O$) zu Stickstoff und Sauerstoff, katalysieren.

Die katalytischen und/oder nicht-katalytische Formkörper (F) werden ausgewählt aus (i) Formkörpern (F1) in Gestalt von geraden Prismen deren Grundfläche ausgewählt wird aus Dreieck, Rechteck, Sechseck oder Fragmenten von diesen Vielecken oder (ii) einer Kombination aus den Formkörpern (F1) mit den im folgenden definierten Formkörpern (F2), die kleiner sind als die Formkörper (F1).

Die Grundfläche der Formkörper (F1) ist die eines vorzugsweise regelmäßigen Dreiecks, eines vorzugsweise regelmäßigen Rechtecks, eines vorzugsweise regelmäßigen Sechsecks oder Fragmente dieser Vielecke. Die Parallelverschiebung des die Grundfläche bildenden Vielecks geschieht senkrecht zur Grundfläche, so dass ein gerades Prisma als geometrischer Körper resultiert. Ist die Grundfläche des geraden Prismas rechteckig spricht man auch von einem Quader. Die zur Grundfläche des jeweiligen Prismas kongruente und parallele Begrenzungsfläche des Prismas heißt Deckfläche, die Gesamtheit aller übrigen Begrenzungsflächen heißt Mantelfläche.

Als ein weiterer Parameter zur Beschreibung der Formkörper (F1) und insbesondere (F2) kommt der "äquivalente Partikeldurchmesser" $Dp_{äq}$ in Frage. Dieser ist wie folgt definiert:

$$Dp_{äq} = 6 \times V_k / A_k.$$

wobei $V_k$ das Volumen des Formkörpers und $A_k$ die gesamt äussere Oberfläche des Formkörpers ist. Beispielhaft sei der äquivalente Partikeldurchmesser für einen sogenannten "Strängling", ein zylindrischer Formkörper, als Formkörper F2 mit einem Durchmesser d = 3 mm und einer Länge l = 10 mm berechnet: Es ergibt sich ein $A_k = 108{,}4$ mm$^2$ und ein $V_k = 70$ mm$^3$. Daraus errechnet sich $Dp_{äq} = 6 \times 70{,}7 / 108{,}4 = 3{,}91$ mm.

Vorzugsweise ist $Dp_{äq}$ der Formkörper (F1) fünfmal bis fünfzigmal, vorzugsweise fünfzehnmal bis fünfundzwanzigmal so groß wie $Dp_{äq}$ der Formkörper (F2).

Die Höhe der Formkörper (F1) in Gestalt eines geraden Prismas kann gleich oder kleiner der längsten Seitenlänge des ihre Grundfläche bildenden n-Ecks (n = 3, 4 oder 6) sein, vorzugsweise ist die Höhe der Formkörper (F1) in Gestalt eines geraden Prismas größer als die längste Seitenlänge des ihre Grundfläche bildenden n-Ecks (n = 3, 4 oder 6) so dass ein in die Höhe gestrecktes Prisma mit einer Längsachse resultiert.

Fragmente der die Grundfläche der Formkörper (F1) bildenden n-Ecke (n = 3, 4 oder 6) können in beliebiger Art gebildet werden, zum Beispiel indem man das Dreieck längs seiner Höhe durchschneidet, das Rechteck längs seiner Diagonalen durchschneidet oder das Sechseck durch zwei sich gegenüberliegende Ecken durchschneidet, unter Bildung eines Dreiecks oder eines Trapez. Durch diese Fragmentierung resultieren wiederum dreidimensionale Formkörper (F1) in Gestalt eines geraden Prismas.

Die Formkörper (F1) in Gestalt eines geraden Prismas haben in der Regel einen Durchmesser oder Diagonale der Grundfläche im Bereich von 20 bis 100 mm, vorzugsweise von 50 bis 75 mm und eine Höhe im Bereich von 100 bis 300 mm, vorzugsweise von 150 bis 230 mm.

Katalytische Formkörper (F1) wie voranstehend beschrieben sind üblicherweise sogenannte Vollkatalysatoren, also jene, die praktisch vollständig ohne inerte Trägersubstanz auskommen. Gut geeignete derartige katalytische Formkörper (F2) sind jene die die Zersetzung von Distickstoffmonioxid ($N_2O$) katalysieren und die beispielsweise in DE 103 50 819 A, insbesondere in den Absätzen [0015] bis [0017] beschrieben sind. Sie sind beispielsweise durch Extrusion erhältlich.

Katalytische Formkörper (F1) wie voranstehend beschrieben können auch solche sein, welche einen Korpus aus inerten Trägermaterial, beispielsweise Cordierit, haben mit einem Kanal oder mehreren Kanälen der/die praktisch parallel zur Längsachse des Formkörpers (F1) verläuft/verlaufen und dessen/deren Kanaloberfläche jeweils mit einer katalytisch aktiven Masse beschichtet ist. Die genannten Kanäle haben in der Regel quadratische Querschnitte und die Anzahl der Kanäle pro Fläche wird in cpsi (cell per square inch) ausgedrückt beträgt beispielsweise 400 bei beispielsweise einer Kanalweite von 1.2 mm oder 230 cpsi bei einer Kanalweite von 1.6 mm (jeweils die Wandstärke abgerechnet). Derartige katalytischen Formkörper werden auch als "Monolithe" bezeichnet. Gut geeignete derartige katalytische Formkörper (F1) sind jene die die Zersetzung von Distickstoffmonioxid (N2O) katalysieren und die beispielsweise in EP 1 147 813 A2 oder in WO 2006/009453 A1 beschrieben sind.

Die katalytischen und/oder nicht-katalytischen Formkörpern (F2) sind kleiner als die Formkörper (F1). Vorzugsweise ist $Dp_{äq}$ der Formkörper (F1) 5 bis 50mal, vorzugsweise 15 bis 25mal so groß wie $Dp_{äq}$ der Formkörper (F2).

Die katalytischen und/oder nicht-katalytischen Formkörpern (F2) sind üblicherweise regelmäßig oder unregelmäßig geformte Feststoffpartikel in der Regel mit einer Länge im Bereich von 3 bis 30 mm und einem Durchmesser im Bereich von 2 bis 10 mm, beispielsweise mit einem runden oder sternförmigen Querschnitt. Weitere katalytische und/oder nicht-katalytischen Formkörper (F2) können folgende sein: High Flow Ringe, Ringe, Kugeln, Stränge, Hohlstränge oder weitere Feststoffpartikel und/oder Formkörper mit ähnlichen wie vorn beschriebenen Dimensionen.

Katalytische Formkörper (F2) wie voranstehend beschrieben sind üblicherweise sogenannte Vollkatalysatoren, also jene, die praktisch vollständig ohne inerte Trägersubstanz auskommen. Gut geeignete derartige katalytische Formkörper (F2) sind jene die die Zersetzung von Distickstoffmonioxid (N₂O) katalysieren und die beispielsweise in DE 103 50 819 A, insbesondere in den Absätzen [0015] bis [0017], beschrieben sind.

Gruppen von m bis n Formkörpern (F1) sind in einer stromaufwärts offenen und stromabwärts mit einem gasdurchlässigen Boden verschlossenen Metallkassette praktisch lückenlos Seitenfläche an Seitenfläche und mit ihrer Längsachse (Höhe) in vertikaler Richtung ausgerichtet zu Modulen (M) eingefasst; m, n ist eine ganze Zahl von 3 bis 30 und n > m.

Der Boden der Module (M) ist in der Regel perforiert - wobei die Art und Geometrie der Perforierung nicht kritisch ist - und insbesondere durchlässig für Gase und/oder Flüssigkeiten, vorzugsweise für Gase. Üblicherweise ist der Boden der Module (M) so perforiert, dass die Partikel, die er trägt, nicht durch die Perforierung fallen können.

Die Grundfläche der Module (M) liegt in der Regel im Bereich von 0,25 bis 1,5 m², vorzugsweise im Bereich von 0,5 bis 1,0 m².

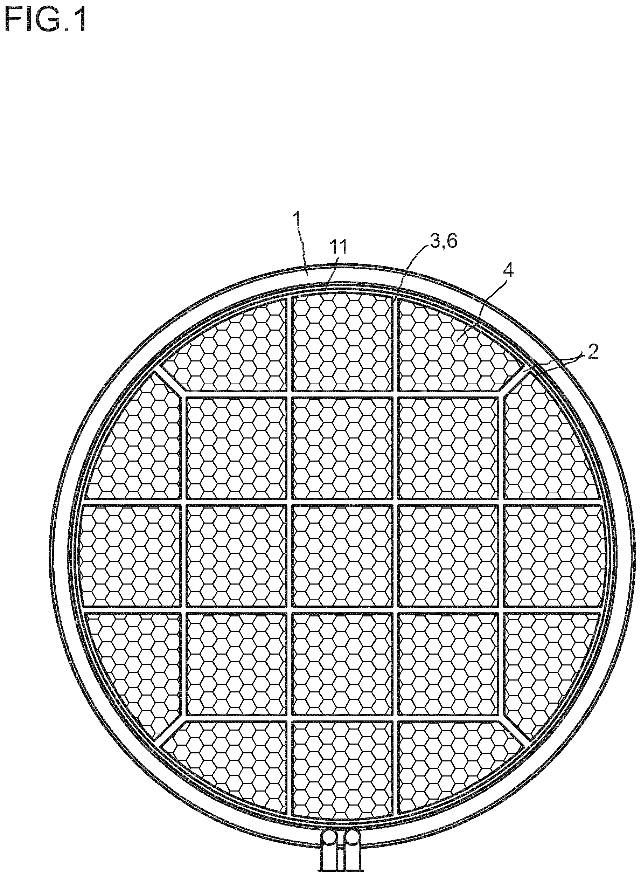

Die Geometrie der Formkörper (F1) wird vorteilhaft so gewählt, dass sie, wenn sie praktisch lückenlos Seitenfläche an Seitenfläche und mit ihrer Längsachse (Höhe) in vertikaler Richtung ausgerichtet angeordnet werden den Querschnitt des Bodens des Moduls (M) praktisch vollständig bedecken. Üblicherweise werden hierzu im inneren Randbereich des Moduls (M) die oben beschriebenen Fragmente der Formkörper (F1) zum Ausfüllen eventueller Lücken eingesetzt. Ein Beispiel für die Bestückung der Module (M) mit Formkörpern (F1) sowie die praktisch flächendeckende Bedeckung des Querschnitts des Bodens B der Vorrichtung D mit den Modulen (M) ist in Figur 1 dargestellt.

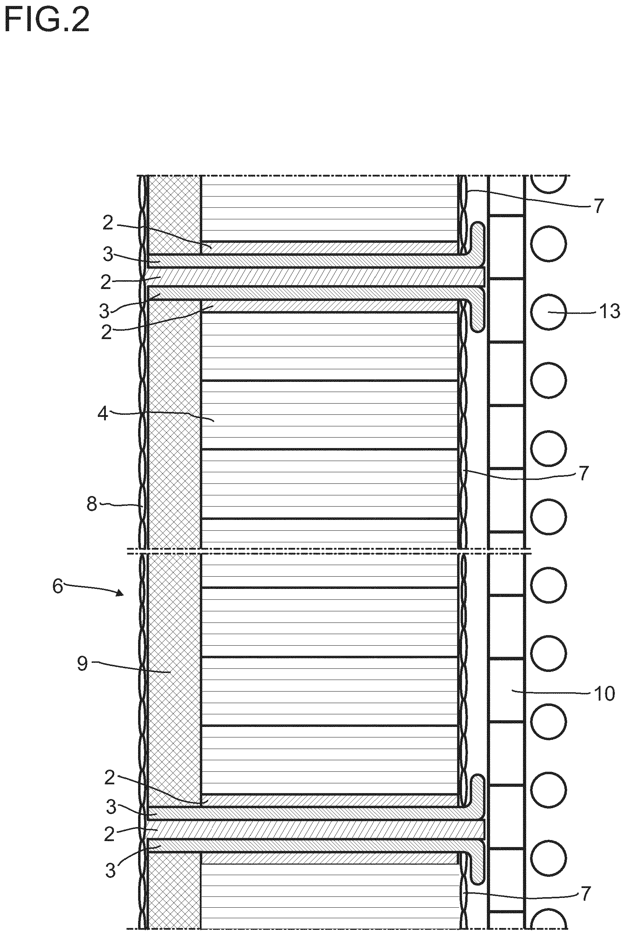

Der Raum zwischen den äußersten Formkörpern (F1) im Modul (M) und der Innenseite des Moduls (M) kann mit einem Fugenfüllmaterial ausgefüllt sein, wie beispielsweise in Figur 2 dargestellt. Als Fugenfüllmaterial kommen in Frage: Gewebe, Filz, Matten oder ähnliches aus hochtemperaturbeständigem anorganischen, vorzugsweise mineralischen Material wie Silikat.

Auf die geschilderte Weise entsteht eine unmittelbar den Boden eines Moduls (M) praktisch vollständig bedeckende Schicht aus Formkörpern (F1) und gegebenenfalls (F2). Selbstverständlich ist es möglich eine weitere Schicht Formkörper (F1) und gegebenenfalls (F2) oder mehrere weitere Schichten Formkörper (F1) und gegebenenfalls (F2) auf diese erste Schicht analog aufzubauen.

Die Wände des Moduls (M) bestehen aus Metall, vorzugsweise aus Werkstoff 1.4835, Alloy 602 CA und Inconel 600, vorzugsweise Inconel 600 oder Alloy 602 CA. Vorteilhaft sind an den die Module (M) bildenden Kassetten, vorzugsweise an deren Wänden, Vorrichtungen, beispielsweise Ösen angebracht, die zum Beispiel dazu dienen, dass man die Module (M) einzeln oder im Verbund, leicht, beispielsweise durch Herausziehen, aus der Vorrichtung D entfernen kann.

Die Höhe der Wände der die Module bildenden Kassetten ist mindestens so hoch wie die Länge der längsten in ihnen enthaltenen Formkörper (F1), vorzugsweise ist die Höhe der Wände der die Module bildenden Kassetten um 5 bis 30 % höher als die längste Höhe der längsten in ihnen enthaltenen Formkörper (F1).

In einer bevorzugten Ausführungsform ist die Höhe der Wände der die Module (M) bildenden Kassetten so hoch, dass die Oberkante der Wände an die Unterseite des dem Boden B der Vorrichtung D stromaufwärts gegenüberliegenden Seite liegenden Geflechts aus Edelmetall und/oder Nicht-Edelmetall stoßen. Das so geschaffene, von Formkörpern (F1) nicht ausgefüllte Volumen in dem Modul (M), kann von einer gas- oder flüssigkeitsdurchlässigen Schicht aus hochtemperaturbeständigem anorganischen, vorzugsweise mineralischen Material wie Aluminiumoxid beispielsweise Schaumkeramik, Berlsättel, oder nicht-katalytischen Formkörpern (F2) teilweise oder vorzugsweise vollständig ausgefüllt werden. Das vollständige Ausfüllen hat zum Beispiel den Vorteil, dass das dem Boden B der Vorrichtung D stromaufwärts gegenüberliegenden Seite liegenden Geflechts aus Edelmetall und/oder Nicht-Edelmetall vollflächig unterstützt wird und somit praktisch nicht durchhängt. Ein Beispiel für diese Ausführungsform ist in Figur 2 dargestellt.

Die Flächengeometrie des Bodens eines Moduls (M) kann mannigfaltig sein. Sie wird vorteilhaft so gewählt, dass, wenn die Module (M) mosaikartig Seite an Seite aneinandergefügt werden sie den Querschnitt des Bodens B der Vorrichtung D praktisch vollständig bedecken. Die Flächengeometrie des Bodens eines Moduls (M) kann folgende sein: (a) vieleckig, wie dreieckig, viereckig oder sechseckig, vorzugsweise viereckig, zum Beispiel rechteckig, besonders bevorzugt quadratisch, oder aber sechseckig, besonders bevorzugt gleichmäßig sechseckig oder (b) vieleckig, vorzugsweise unregelmäßig vieleckig, besonders bevorzugt unregelmäßig viereckig, wobei jeweils eine Seite des Vielecks durch einen Kreisbogen gebildet wird. Ein Beispiel für diverse Flächengeometrien des Bodens eines Moduls (M) sowie die praktisch flächendeckende Bedeckung des Querschnitts des Bodens B der Vorrichtung D mit den Modulen (M) ist beispielhaft in Figur 1 dargestellt.

Die Module (M) werden, gegebenenfalls unter Mitwirkung eines Fugenfüllmaterials, unter vertikaler Ausrichtung der Längsachse der Formkörper (F1) Seitenfläche an Seitenfläche praktisch lückenlos so mosaikartig aneinandergefügt sind, dass sie den Querschnitt des Bodens B praktisch vollständig bedecken.

Die Fugen oder Spalte die sich bilden können wo die äußeren Seitenflächen der die Module (M) bildenden Kassetten aneinanderstoßen oder auf die Innenfläche der Seitenbegrenzung W der Vorrichtung D stoßen, können vorzugsweise mit Fugenfüllmaterial ausgefüllt werden. Als solches Fugenfüllmaterial kommen in Frage: Gewebe, Filz, Matten oder ähnliches aus hochtemperaturbeständigem anorganischen, vorzugsweise mineralischen Material wie Silikate, beispielsweise Matten aus polykristallinen Fasern.

Zusätzlich wie voranstehen beschrieben kann das Volumen V der Vorrichtung D in mannigfaltiger Weise teilweise oder vollständig mit Modulen (M) und/oder katalytischen und/oder nicht-katalytischen Formkörpern (F1) und/oder (F2), vorzugsweise horizontal schichtartig, ausgefüllt sein, vorzugsweise bis maximal zu dem untersten Geflecht aus Edelmetall und/oder Nicht-Edelmetall, beispielsweise wie im Folgenden unter a) bis c) beschrieben:

a) Eine unterste Schicht katalytische und/oder nicht-katalytische Formkörper (F2), darauf eine Schicht oder mehrere Schichten von Modulen (M) mit katalytischen und/oder nicht-katalytischen Formkörpern (F1).

b) Eine unterste Schicht von Modulen (M) mit katalytischen und/oder nicht-katalytischen Formkörpern (F1) darauf eine Schicht oder mehrere Schichten von katalytischen und/oder nicht-katalytischen Formkörpern (F2).

c) Eine unterste Schicht entweder von Modulen (M) mit katalytischen und/oder nicht-katalytischen Formkörpern (F1) oder eine unterste Schicht von katalytischen und/oder nicht-katalytischen Formkörpern (F2) und darüber jeweils regelmäßig alternierend oder unregelmäßig aufeinandergeschichtet mindestens eine Schicht von Modulen (M) mit katalytischen und/oder nicht-katalytischen Formkörpern (F1) oder von katalytischen und/oder nicht-katalytischen Formkörpern (F2).

Üblicherweise werden die Schichten bei den beschriebenen Varianten durch Vorrichtungen wie horizontal angeordnete perforierte Bleche oder Metallnetze, beispielsweise Megapyrnetze, horizontal getrennt.

In weiteren gut geeigneten Ausführungsformen kann das Volumen der Module (M) selbst in mannigfaltiger Weise teilweise oder vollständig mit katalytischen und/oder nicht-katalytischen Formkörpern (F1) und/oder (F2), vorzugsweise horizontal schichtartig, ausgefüllt sein, beispielsweise wie im Folgenden unter ba) bis bc) beschrieben:

ba) Eine unterste Schicht katalytische und/oder nicht-katalytische Formkörper (F2), darauf eine Schicht oder mehrere Schichten von katalytischen und/oder nicht-katalytischen Formkörpern (F1).

bb) Eine unterste Schicht von katalytischen und/oder nicht-katalytischen Formkörpern (F1) darauf eine Schicht oder mehrere Schichten von katalytischen und/oder nicht-katalytischen Formkörpern (F2).

bc) Eine unterste Schicht entweder von katalytischen und/oder nicht-katalytischen Formkörpern (F1) oder eine unterste Schicht von katalytischen und/oder nicht-katalytischen Formkörpern (F2) und darüber jeweils regelmäßig alternierend oder unregelmäßig aufeinandergeschichtet mindestens eine Schicht von katalytischen und/oder nicht-katalytischen Formkörpern (F1) oder von katalytischen und/oder nicht-katalytischen Formkörpern (F2).

Die Schichten bei den beschriebenen Varianten ba) bis bc) können durch Vorrichtungen wie horizontal angeordnete perforierte Bleche oder Metallnetze, beispielsweise Megapyrnetze, horizontal getrennt werden.

Bei dem Reaktor R kann es sich um ein Gefäß zur Durchführung von chemischen Reaktionen, vorzugsweise im großtechnischen Maßstab, handeln.

Beispiele für derartige chemische Reaktionen sind Oxidationen von kohlenstoffhaltigen und/oder stickstoffhaltigen Verbindungen, vorzugsweise mit sauerstoffhaltigen oder halogenhaltigen Gasen. Beispiele derartiger Oxidationen sind die übliche Verbrennung von Erdöl, Naphtha, Erdgas, Kohle und dergleichen, zum Beispiel zur Erzeugung von Wärme und/oder elektrischer Energie; die katalytische Oxidation von Ammoniak mit einem sauerstoffhaltigen Gas, vorzugsweise Luft oder reiner Sauerstoff, zu Stickstoffoxiden; die sogenannte Ammonoxidation von organischen Verbindungen mit Methylgruppen oder von Methan mit Ammoniak und Sauerstoff zu Nitrilen oder Cyanwasserstoff.

Ein weiteres Beispiel für derartige chemische Reaktionen ist die, vorzugsweise katalytische, Umwandlung von Stickstoffoxiden, vorzugsweise Distickstoffoxid ($N_2O$), zu Stickstoff und Sauerstoff.

Vorzugsweise handelt es sich bei dem Reaktor R um ein Gefäß zur Herstellung, vorzugsweise im großtechnischen Maßstab, von chemischen Produkten, zum Beispiel zum Herstellen von Stickstoffoxiden wie $NO_2$, $N_2O$, $N_2O_4$, NO und/oder Salpetersäure und/oder salpetrige Säure unter anderem durch katalytische Oxidation von Ammoniak mit einem sauerstoffhaltigen Gas, beispielsweise Luft; zum Herstellen von Schwefeloxiden wie $SO_2$, $SO_3$ und/oder Schwefelsäure, schweflige Säure oder weitere Säuren der Schwefeloxide.

Zum Beispiel ist der Reaktor R ein zylindrisches Gefäß zur Herstellung, vorzugsweise im großtechnischen Maßstab, von Stickstoffoxiden wie $NO_2$, $N_2O$, $N_2O_4$, NO und/oder Salpetersäure und/oder salpetrige Säure durch katalytische Oxidation von Ammoniak mit einem sauerstoffhaltigen Gas, beispielsweise Luft oder reiner Sauerstoff. Eine für dieses Beispiel gut geeignete Ausführungsform ist beispielsweise in Figur 4 dargestellt.

Ein weiterer Gegenstand der vorliegenden Anmeldung ist die Verwendung des Reaktors R mit der Vorrichtung D, in einem Verfahren zur Herstellung von Stickstoffoxiden durch katalytische Oxidation von Ammoniak, beispielsweise im Temperaturbereich von 800 bis 900 °C und beispielsweise an einem Netzt aus Edelmetall, wie Platin oder Platin-Rhodiumlegierung, mit einem sauerstoffhaltigen Gas, beispielsweise Luft oder reiner Sauerstoff und gegebenenfalls Umsetzung der Stickstoffoxide mit Wasser zur Salpetersäure, wobei ausdrücklich darauf hingewiesen wird, dass sämtliche Offenbarung zum Reaktor R und/oder zur Vorrichtung D oder andere Erfindungsgegenstände hierin in den voranstehend genannten Gegenstand der vorliegenden Erfindung ausdrücklich inkorporiert wird.

Ein weiterer Gegenstand der vorliegenden Anmeldung ist ein Verfahren zur Herstellung von Stickstoffoxiden, wobei man in einem Reaktor R Ammoniak mit einem sauerstoffhaltigen Gas, vorzugsweise Luft oder reinem Sauerstoff, beispielsweise im Temperaturbereich von 800 bis 900 °C, katalytisch, beispielsweise an einem Netzt aus Edelmetall, wie Platin oder Platin-Rhodiumlegierung oxidiert und die entstandenen Stickstoffoxide enthaltenden Reaktionsprodukte, die in der Regel Stickstoffmonoxid als Hauptkomponente und Distickstoffoxid als Nebenkomponente enthalten, durch eine Anordnung von katalytischen und/oder nicht-katalytischen Formkörpern (F) in einer Vorrichtung D strömen lässt, welche üblicherweise in Strömungsrichtung stromabwärts, üblicherweise unterhalb des Katalysatornetzes, angeordnet ist stömen lässt, wobei die Anordnung der katalytischen und/oder nicht-katalytischen Formkörpern (F) und die Vorrichtung D, jeweils wie vorher beschrieben ist, und wobei ausdrücklich darauf hingewiesen wird, dass sämtliche Offenbarung zu den katalytischen und/oder nicht-katalytischen Formkörpern (F), zur Vorrichtung D hierin und/oder dem Reaktor R oder andere Erfindungsgegenstände hierin in den voranstehend genannten Gegenstand der vorliegenden Erfindung ausdrücklich inkorporiert wird.

Ein weiterer Gegenstand der vorliegenden Anmeldung ist ein Verfahren zur Herstellung von Salpetersäure, wobei man in einem Reaktor R Ammoniak mit einem sauerstoffhaltigen Gas, vorzugsweise Luft oder reinem Sauerstoff, beispielsweise im Temperaturbereich von 800 bis 900 °C, katalytisch, beispielsweise an einem Netz aus Edelmetall, wie Platin oder Platin-Rhodiumlegierung umsetzt und die entstandenen Stickstoffoxide enthaltenden Reaktionsprodukte, die in der Regel Stickstoffmonoxid als Hauptkomponente und Distickstoffoxid als Nebenkomponente enthalten, durch eine Anordnung mit katalytischen und/oder nicht-katalytischen Formkörpern (F) in einer Vorrichtung D, welche üblicherweise in Strömungsrichtung stromabwärts, üblicherweise unterhalb des Katalysatornetzes angeordnet ist, strömen lässt, üblicherweise abkühlt, wobei sie mit Sauerstoff unter Bildung von Stickstoffdioxid reagieren und mit Wasser zur Salpetersäure umsetzt, wobei die Anordnung der katalytischen und/oder nicht-katalytischen Formkörpern (F) die Vorrichtung D und der Reaktor R, jeweils, wie vorher beschrieben sind, wobei ausdrücklich darauf hingewiesen wird, dass sämtliche Offenbarung zu den katalytischen und/oder nicht-katalytischen Formkörpern (F), zur Vorrichtung D hierin und/oder dem Reaktor R oder andere Erfindungsgegenstände hierin in den voranstehend genannten Gegenstand der vorliegenden Erfindung ausdrücklich inkorporiert wird.

Ausführungsbeispiele sind auch in den Figuren dargestellt und werden in der nachfolgenden Beschreibung näher erläutert.

Bezugszeichenliste zu den Figuren

1 Reaktorwand
2 Fugenfüllmaterial
3 Wand eines Moduls (M)
4 Formkörper (F1)
5 [LEER]
6 Modul (M)
7 Boden eines Moduls (M)
8 Geflecht aus Edelmetall und/oder Nicht-Edelmetall
9 Ausgleichskörper
10 Boden B der Vorrichtung D
11 Seitenbegrenzung W der Vorrichtung D
12 U-förmige Schürze
13 Rohre für Kühlmedium

Figur 1 zeigt im Querschnitt einen Teil eines zylindrischen Reaktors R, vorzugsweise für die $NO_x/HNO_3$-Ausführungsform, in welchem die Vorrichtung D aufgenommen ist. Es sind dargestellt: Die Reaktorwand 1, 11 die Seitenbegrenzung W der Vorrichtung D, die von den Wänden 3 eingehausten Module 6, wobei die Fugen zwischen den Modulen (M) 6 selbst und zwischen den Modulen (M) 6 und der Reaktorwand 1 mit Fugenfüllmaterial 2 ausgefüllt sind. In den Modulen M befinden sich die Formkörper (F1) 4. Die Module (M) 6 bedecken den Querschnitt des Bodens B praktisch vollständig.

Figur 2 zeigt einen Längsschnitt unter anderem durch ein Modul (M) 6. Es ist dargestellt: die Wand 3 eines Moduls (M) 6, der Boden 7 eines Moduls (M) 6, der Boden B 10 auf dem die Module (M )ruhen, die Formkörper (F1) 4, welche in den Modulen (M) eingefasst sind, das Fugenfüllmaterial 2, das Geflecht aus Edelmetall und/oder Nicht-Edelmetall 8. Der Raum zwischen Formkörper (F1) und Geflecht 8 ist mit einer gas- und/oder flüssigkeitsdurchlässigen Schicht aus hochtemperaturbeständigem anorganischen Material, dem Ausgleichskörper 9, aufgefüllt.

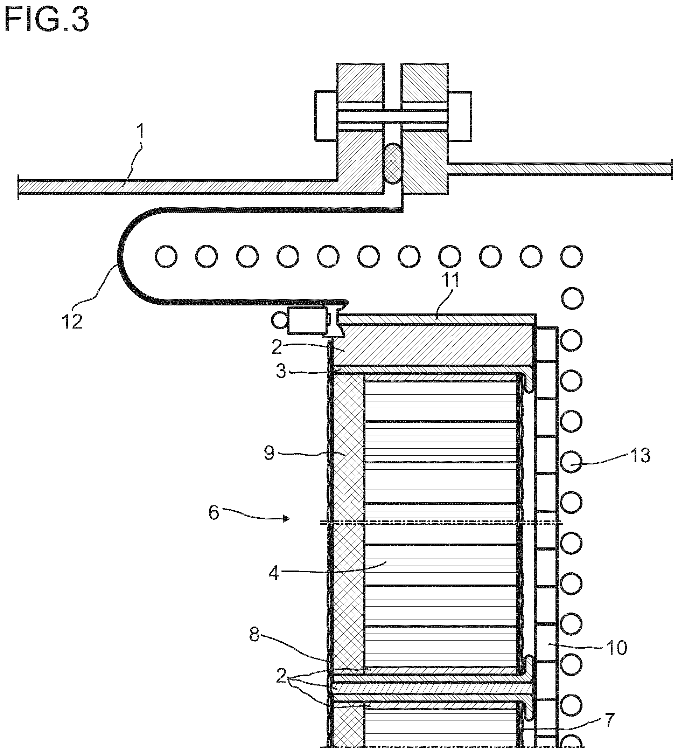

Figur 3 ist analog zu Figur 2 inklusive der entsprechenden Bezugszeichen und zeigt im Längsschnitt einen Teil eines zylindrischen Reaktors R - vorzugsweise für die $NO_x/HNO_3$-Ausführungsform - in welchem die Vorrichtung D mit Modulen (M) 6 aufgenommen ist. Eine U-förmige Schürze 12 aus Metall ist auf der einen Seite per Flansch an der Reaktorwand 1 befestigt. An der anderen Seite der U-förmigen Schürze 12 aus Metall ist die Seitenbegrenzung W 11 der Vorrichtung D befestigt. Die U-förmige Schürze 12 umhüllt einen Teil der Rohre für ein Kühlmedium 13.

Beispiele

Allgemein

Ein Ammoniak-Luftgemisch (12,5 Vol-% $NH_3$, 87,5 Vol-% Luft) wird dem zylindrischen Ammoniakverbrennungsofen (Reaktor R), in dem eine Vorrichtung D in Gestalt eines Korbes mit rundem Bodenquerschnitt aufgenommen ist, zugeführt. Die korbartige Vorrichtung D hat einen lichten Durchmesser von 3,52 m. Der Reaktor R wird mit einem Ammoniak-Luftgemisch-Durchsatz von 3650 $Nm^3$/h und pro $m^2$ Katalysatornetzfläche betrieben. Die Eintrittstemperatur des Ammoniak-Luft-Gemisches in den Reaktor R beträgt 28,4 °C und der Druck vor dem Platin-Katalysatornetz im Reaktor R 1080 mbar (abs.). Am Platin-Katalysatornetz verbrennt das Ammoniak bei Temperaturen von ca. 880 °C zum Reaktionsprodukt welches dann durch die Vorrichtung D, enthaltend eine katalytisch aktive Füllung, geleitet wird und Stickstoffmonoxid als Hauptkomponente und geringe Mengen Distickstoffmonoxid $N_2O$ ("Lachgas") enthält. Die Lachgaskonzentration des Reaktionsprodukts beträgt direkt nach dem Platin-Katalysatornetz, also noch vor dem Auftreffen auf die katalytisch aktive Füllung der korbartigen Vorrichtung D, ca. 1000 ppm. Dem Platinnetz nachgeschaltet ist die korbartige Vorrichtung D, enthaltend katalytische Formkörper (F1) (erfindungsgemäß) oder katalytische Formkörper (F2) (nicht erfindungsgemäß), wie unten näher beschrieben.

Die nicht-netzartigen Teile der korbartigen Vorrichtung D bestehen aus Inconel 600, die Seitenbegrenzung W ist ca. 250 mm hoch.

Direkt nach dem Platin-Katalysatornetz (Entnahmestelle 1) und in der Mitte des Reaktors R stromabwärts direkt unterhalb des Bodens B der Vorrichtung D (Entnahmestelle 2) sowie an der Peripherie des Reaktors stromabwärts direkt unterhalb des äußeren Randbereichs des Bodens B der Vorrichtung D (Entnahmestelle 3) können Proben des Reaktionsprodukts entnommen werden und auf Lachgaskonzentration mittels GC/MS-Methode untersucht werden.

Nach neun Monaten Betriebsdauer des Reaktors R wird die Vorrichtung D und deren Füllung geprüft. Lachgaskonzentrationen werden während des Betriebs des Reaktors R gemessen.

Vergleichsbeispiel 1 (nicht erfindungsgemäß)

Die korbartige Vorrichtung D mit rundem Bodenquerschnitt enthält anfangs praktisch flächendeckend eine 150 mm hohe Schicht aus katalytischen Formkörpern (F2), nämlich Vollkatalysatorstränglingen, wobei diese Stränglinge einen sternförmigem Querschnitt, einen Durchmesser von ca. 6 mm und eine Länge von 5 bis 30 mm haben und aus einer Mischung von CuO, ZnO und $Al_2O_3$ bestehen.

Im kontinuierlichen Verfahren wird ein Ammoniak-Luftgemisch wie oben beschrieben umgesetzt.

Der Randbereich der Vorrichtung D weist eine trichterförmige Vertiefung in Form eines Grabens von 96 mm Tiefe in der katalytisch aktiven Füllung auf, deren Höhe im Randbereich der Vorrichtung D nur noch 54 mm (vor Versuchsbeginn 150 mm) beträgt.

Die gemessene Lachgaskonzentration an der Entnahmestelle 3 praktisch unterhalb der trichterförmigen Vertiefung beträgt 676 ppm Lachgas, an der Entnahmestelle 2 beträgt die gemessene Lachgaskonzentration 186 ppm so dass die gemittelte gemessene Lachgaskonzentration stromabwärts nach der Vorrichtung D und dem stromabwärts darunter liegenden Wärmetauscher 227 ppm beträgt.

Beispiel 1 (erfindungsgemäß)

Die korbartige Vorrichtung D mit rundem Bodenquerschnitt enthält praktisch flächendeckend Metallkassetten, wie im Folgenden beschrieben und in analoger Weise in Figur 1 dargestellt. Es werden 16 Metallkassetten eingesetzt, die aus quadratischen Formen mit 800 × 800 mm Außenmaßen und aus an die zylindrische Seitenbegrenzung der Vorrichtung D bzw. des Reaktors R angepasste Formen bestehen. Die Kassetten sind mit Fugenfüllmaterial untereinander und zur zylindrischen Seitenbegrenzung hin abgedichtet. Die Kassetten sind mit erfindungsgemäßen katalytischen Formkörpern (F1) in Gestalt eines regelmäßigen sechseckigen Prismas oder dessen Fragmente gefüllt, wie in Figur 1 dargestellt. Diese katalytischen Formkörpern (F1) sind sogenannte Vollkatalysatoren und bestehen im Wesentlichen aus einer Mischung von CuO, ZnO und $Al_2O_3$. Sie haben eine Höhe von 160 mm.

Im kontinuierlichen Verfahren wird ein Ammoniak-Luftgemisch wie oben beschrieben umgesetzt.

Die gemessene Lachgaskonzentration an der Entnahmestelle 3 im Außenbereich der Vorrichtung D wo im nicht-erfindungsgemäßen Fall de trichterförmige Vertiefung war beträgt 84 ppm Lachgas, an der Entnahmestelle 2 beträgt die gemessene Lachgaskonzentration 81 ppm so dass die gemittelte gemessene Lachgaskonzentration stromabwärts nach der Vorrichtung D und dem stromabwärts darunter liegenden Wärmetauscher 82 ppm beträgt.

**Patentansprüche**

1. Reaktor R mit Vorrichtung D, diese enthaltend einen gas-und/oder flüssigkeits-durchlässigen Boden B, in dessen Randbereich eine Seitenbegrenzung W angeordnet ist, die den Boden B vollständig umschließt und ein Volumen V bildet, das katalytische und/oder nicht-katalytische Formkörper (F) enthält, wobei sich auf der dem Boden B stromaufwärts gegenüberliegenden Seite mindestens ein Geflecht aus Edelmetall und/oder Nicht-Edelmetall befindet, und die katalytischen und/oder nicht-katalytische Formkörper (F) ausgewählt werden aus (i) Formkörpern (F1) in Gestalt von geraden Prismen deren Grundfläche ausgewählt wird aus Dreieck, Rechteck, Sechseck oder Fragmente dieser Vielecke oder (ii) einer Kombination aus den Formkörpern (F1) mit Formkörpern (F2) die kleiner sind als die Formkörper (F1), **dadurch gekennzeichnet, dass** Gruppen von m bis n Formkörpern (F1), m, n ist eine ganze Zahl von 3 bis 30 und n > m, in stromaufwärts offenen und stromabwärts mit einem gasdurchlässigen Boden verschlossenen Module (M) bildenden Metallkassetten praktisch lückenlos Seitenfläche an Seitenfläche und mit ihrer Längsachse in vertikaler Richtung ausgerichtet den Querschnitt des Bodens praktisch vollständig bedeckend zu Modulen (M) eingefasst sind und die Module (M), gegebenenfalls unter Mitwirkung eines Fugenfüllmaterials, unter vertikaler Ausrichtung der Längsachse der Formkörper (F1) praktisch lückenlos so mosaikartig aneinandergefügt sind, dass sie den Querschnitt des Bodens B praktisch vollständig bedecken.

2. Reaktor R mit Vorrichtung D nach Anspruch 1, wobei sich zumindest auf einem Teil der Fläche der Innenseite der Seitenbegrenzung W der Vorrichtung D eine wärmeisolierende Schicht S befindet und das Material für die wärmeisolierende Schicht S ausgewählt wird aus der Gruppe bestehend aus keramischem Material, mikroporösem Material und Silikatfasern.

3. Reaktor R mit Vorrichtung D nach Anspruch 1 bis 2, wobei der Querschnitt des Reaktors R und des Bodens B jeweils praktisch rund ist.

4. Reaktor R mit Vorrichtung D nach Anspruch 1 bis 3, wobei das Volumen V der Vorrichtung D bis maximal zu dem untersten Geflecht aus Edelmetall und/oder Nicht-Edelmetall mit katalytischen und/oder nicht-katalytischen Formkörpern (F) gefüllt ist.

5. Verwendung des Reaktors R wie in den Ansprüchen 1 bis 4 definiert in einem Verfahren zur Herstellung von Stickstoffoxiden durch katalytische Oxidation von Ammoniak mit einem sauerstoffhaltigen Gas und gegebenenfalls Umsetzung der Stickstoffoxide mit Wasser zur Salpetersäure.

6. Verfahren zur Herstellung von Stickstoffoxiden, wobei man in einem Reaktor R, wie in den Ansprüchen 1 bis 4 definiert, Ammoniak mit einem sauerstoffhaltigen Gas katalytisch oxidiert und die so entstehenden Stickstoffoxide enthaltenden Reaktionsprodukte durch eine Anordnung von katalytischen und/oder nicht-katalytischen Formkörpern (F) in einer Vorrichtung D strömen lässt, **dadurch gekennzeichnet, dass** die Anordnung der katalytischen und/oder nicht-katalytischen Formkörpern (F) und die Vorrichtung D, wie in den Ansprüchen 1 bis 4 definiert, sind.

7. Verfahren zur Herstellung von Salpetersäure, wobei man in einem Reaktor R Ammoniak mit einem sauerstoffhaltigen Gas katalytisch oxidiert und die so entstehenden Stickstoffoxide enthaltenden Reaktionsprodukte durch eine Anordnung von katalytischen und/ oder nicht-katalytischen Formkörpern (F) in einer Vorrichtung D strömen lässt und danach mit Wasser zur Salpetersäure umsetzt, **dadurch gekennzeichnet, dass** die Anordnung der katalytischen und/oder nicht-katalytischen Formkörpern (F) und die Vorrichtung D, wie in den Ansprüchen 1 bis 4 definiert, sind.

**Claims**

1. A reactor R with apparatus D, the latter comprising a gas- and/or liquid-permeable tray B, in the edge region of which there is disposed a lateral boundary W which fully encloses the tray B and forms a volume V comprising catalytic and/or noncatalytic shaped bodies (F), wherein there is at least one braid made of precious metal and/or base metal on the upstream side opposite the tray B, and the catalytic and/or noncatalytic shaped bodies (F) are selected from (i) shaped bodies (F1) in the form of straight prisms, the footprint of which is selected from triangle, rectangle, hexagon or fragments of these polygons, and (ii) a combination of the shaped bodies (F1) with shaped bodies (F2) that are smaller than the shaped bodies (F1), wherein groups of m to n shaped bodies (F1), m and n being an integer from 3 to 30 with n > m, are framed in metal cassettes which form modules (M) and are open in the upstream direction and closed in the downstream direction by a gas-permeable tray, in a virtually seamless manner with side face to side face and with their longitudinal axis aligned in vertical direction, virtually completely covering the cross section of the tray, to form modules (M), and the modules (M), optionally with cooperation of a joint filler material, with vertical alignment of the longitudinal axis of the shaped bodies (F1), are joined to one another virtually seamlessly in a mosaic-like manner such that they virtually completely cover the cross section of the tray B.

2. The reactor R with apparatus D according to claim 1, wherein there is a thermally insulating layer S at least over part of the area of the inside of the lateral boundary W of the apparatus D, and the material for the thermally insulating layer S is selected from the group consisting of ceramic material, microporous material and silicate fibers.

3. The reactor R with apparatus D according to claim 1 to 2, wherein the cross section of the reactor R and of the tray B is virtually round in each case.

4. The reactor R with apparatus D according to claim 1 to 3, wherein the volume V of the apparatus D has been filled with catalytic and/or noncatalytic shaped bodies (F) up to a maximum of the lowermost braid made of precious metal and/or base metal.

5. The use of the reactor R as defined in claims 1 to 4 in a process for preparing nitrogen oxides by catalytic oxidation of ammonia with an oxygenous gas and optionally reaction of the nitrogen oxides with water to give nitric acid.

6. A process for preparing nitrogen oxides, wherein, in a reactor R as defined in claims 1 to 4, ammonia is catalytically oxidized with an oxygenous gas and the reaction products which comprise nitrogen oxides and are thus formed are allowed to flow through an arrangement of catalytic and/or noncatalytic shaped bodies (F) in an apparatus D, wherein the arrangement of the catalytic and/or noncatalytic shaped bodies (F) and the apparatus D are as defined in claims 1 to 4.

7. A process for preparing nitric acid, wherein, in a reactor R, ammonia is catalytically oxidized with an oxygenous gas and the reaction products which comprise nitrogen oxides and are thus formed are allowed to flow through an arrangement of catalytic and/or noncatalytic shaped bodies (F) in an apparatus D and then reacted with water to give nitric acid, wherein the arrangement of the catalytic and/or noncatalytic shaped bodies (F) and the apparatus D are as defined in claims 1 to 4.

**Revendications**

1. Réacteur R comportant un dispositif D, celui-ci contenant un fond B perméable aux gaz et/ou aux liquides, dans la zone de bordure duquel est agencée une délimitation latérale W qui entoure entièrement le fond B et forme un volume V, qui contient des corps moulés (F) catalytiques et/ou non catalytiques, au moins un treillis de métal noble et/ou de métal non noble se trouvant sur le côté opposé au fond B dans le sens amont, et les corps moulés (F) catalytiques et/ou non catalytiques étant choisis parmi (i) des corps moulés (F1) sous forme de prismes droits dont la surface au sol est choisie parmi un triangle, un rectangle, un hexagone ou des fragments de ces polygones et (ii) une combinaison des corps moulés (F1) avec des corps moulés (F2) qui sont plus petits que les corps moulés (F1), **caractérisé en ce que** des groupes de m à n corps moulés (F1), m, n étant un nombre entier de 3 à 30 et n > m, sont encadrés dans des cassettes métalliques formant des modules (M) ouverts dans le sens amont et fermés dans le sens aval par un fond perméable aux gaz, d'une manière pratiquement intégrale avec face latérale contre face latérale et avec leur axe longitudinal aligné en direction verticale, recouvrant pratiquement complètement la section transversale du fond, pour former des modules (M), et les modules (M), éventuellement en coopération avec un matériau de remplissage de joint, avec un alignement vertical de l'axe longitudinal des corps moulés (F1), étant joints les uns avec les autres pratiquement intégralement sous une forme de mosaïque telle qu'ils recouvrent pratiquement complètement la section transversale du fond B.

2. Réacteur R comportant un dispositif D selon la revendication 1, une couche thermoisolante S se trouvant sur au moins une partie de la surface de la face intérieure de la délimitation latérale W du dispositif D et le matériau pour la couche thermoisolante S étant choisi dans le groupe constitué par un matériau céramique, un matériau microporeux et des fibres de silicate.

3. Réacteur R comportant un dispositif D selon les revendications 1 et 2, la section transversale du réacteur R et du fond B étant à chaque fois pratiquement arrondie.

4. Réacteur R comportant un dispositif D selon les revendications 1 à 3, le volume V du dispositif D étant rempli au maximum jusqu'au treillis de métal noble et/ou de métal non noble le plus bas, avec des corps moulés (F) catalytiques et/ou non catalytiques.

5. Utilisation du réacteur R tel que défini dans les revendications 1 à 4 dans un procédé de préparation d'oxydes d'azote par oxydation catalytique d'ammoniac avec un gaz contenant de l'oxygène et éventuellement transformation des oxydes d'azote avec de l'eau en acide nitrique.

6. Procédé pour la préparation d'oxydes d'azote, dans lequel on oxyde de manière catalytique de l'ammoniac avec un gaz contenant de l'oxygène, dans un réacteur R tel que défini dans les revendications 1 à 4 et on laisse s'écouler les produits de réaction contenant des oxydes d'azote ainsi obtenus à travers un agencement de corps moulés (F) catalytiques et/ou non catalytiques dans un dispositif D, **caractérisé en ce que** l'agencement des corps moulés (F) catalytiques et/ou non catalytiques et le dispositif D sont tels que définis dans les revendications 1 à 4.

7. Procédé pour la préparation d'acide nitrique, dans lequel on oxyde de manière catalytique de l'ammoniac avec un gaz contenant de l'oxygène dans un réacteur R et on laisse s'écouler les produits de réaction contenant des oxydes d'azote ainsi obtenus à travers un agencement de corps moulés (F) catalytiques et/ou non catalytiques dans un dispositif D et ensuite on les met à réagir avec de l'eau pour donner de l'acide nitrique, **caractérisé en ce que** l'agencement des corps moulés (F) catalytiques et/ou non catalytiques et le dispositif D sont tels que définis dans les revendications 1 à 4.

# FIG.1

# FIG.2

# FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006009453 A1
- WO 2015022247 A1
- DE 10350819 A
- EP 1147813 A2


**In der Beschreibung aufgeführte Nicht-Patentliteratur**

- Nitric Acid, Nitrous Acid, and Nitrogen Oxides. Ullmanns Encyclopedia of Industrial Chemistry. Wiley-VCH Verlag GmbH & Co, 2003, vol. 23, 1-49